# EUROPEAN PATENT APPLICATION

(11) **EP 4 686 059 A1**
(43) Date of publication of application: **28.01.2026**
(21) Application number: 25190866.1
(22) Date of filing: 22.07.2025
(51) Int. Cl.: H02M 1/00, H02M 1/14, H02M 1/15, H02M 7/487, H02M 7/53, H02M 7/5387, H02M 7/5395, H02M 7/493

(54) **POWER CONVERTER AND METHOD FOR CONTROLLING INVERTER CIRCUIT**

(30) Priority: 23.07.2024 CN 202410997242
(71) Applicant: HUAWEI DIGITAL POWER TECHNOLOGIES CO., LTD., Shenzhen Guangdong 518043 (CN)
(72) Inventor: GAO, Shen, Shenzhen 518043 (CN); XU, Fuqiang, Shenzhen 518043 (CN); LU, Fenglong, Shenzhen 518043 (CN); YU, Xinyu, Shenzhen 518043 (CN); GAO, Yongbing, Shenzhen 518043 (CN)
(74) Representative: Isarpatent

(57) **Abstract**

This application provides a power converter and a method for controlling an inverter circuit, applied to the field of power electronics technologies, to reduce costs while reducing a high-frequency ripple current caused by the inverter circuit. The power converter includes the inverter circuit and a controller. The inverter circuit includes a plurality of bridge arms. The controller is configured to: if output voltage directions of any two bridge arms in the plurality of bridge arms are the same and output current directions of the any two bridge arms are the same, control a phase difference between output voltages output by the any two bridge arms to be greater than a first threshold. Based on this, when output voltage directions of any two bridge arms in the inverter circuit are the same and output current directions corresponding to the two bridge arms are the same, the controller may control the two bridge arms to enable a phase difference between output voltages of the two bridge arms to be greater than the first threshold, and therefore enable the output voltages of the two bridge arms to be phase-shifted, to reduce the high-frequency ripple current output by the inverter circuit.

## Description

### TECHNICAL FIELD

This application relates to the field of power electronics technologies, and in particular, to a power converter and a method for controlling an inverter circuit.

### BACKGROUND

A power converter is a device that can convert a direct current of a direct current power supply into an alternating current for output to an alternating current power grid or a load. In scenarios such as a photovoltaic generation system (PGS), an energy storage system (ESS), and an uninterruptible power supply (UPS), the power converter is a core device. Therefore, running stability of the power converter directly affects running reliability of the PGS, the energy storage system, the UPS, and the like. The power converter generally includes a direct current input filter circuit, an inverter circuit, and an alternating current output filter circuit. The direct current output by the direct current power supply is filtered by the direct current input filter circuit, and then a filtered direct current is output to the inverter circuit. The inverter circuit converts the direct current into an alternating current. The alternating current is filtered by the alternating current output filter circuit, and then a filtered alternating current is output to the alternating current power grid or the load. In the foregoing implementation process, a switching frequency of a switching transistor on each bridge arm in the inverter circuit is high. As a result, a high-frequency ripple current is generated on a direct current side of the inverter circuit. When the high-frequency ripple current is excessively large, a capacitor in the direct current input filter circuit is prone to be damaged. Consequently, the running stability of the power converter is affected. In an existing solution, an additional component is usually required to reduce the high-frequency ripple current. Therefore, it is urgent to provide a solution to resolve the foregoing problem.

### SUMMARY

Embodiments of this application provide a power converter and a method for controlling an inverter circuit, to reduce costs while reducing a high-frequency ripple current caused by the inverter circuit.

To achieve the foregoing objective, embodiments of this application provide the following technical solutions.

According to a first aspect, a power converter is provided. The power converter includes an inverter circuit and a controller. The inverter circuit includes a plurality of bridge arms. If output voltage directions of any two bridge arms in the plurality of bridge arms are the same and output current directions of the any two bridge arms are the same, the controller may control a phase difference between output voltages output by the any two bridge arms to be greater than or equal to a first threshold.

In a process in which the power converter converts a direct current output by a direct current power supply into an alternating current for output, a switching transistor on each bridge arm in the inverter circuit performs a high-frequency switching operation. As a result, a high-frequency ripple current with a same switching frequency as the switching transistors is generated in the circuit. When the high-frequency ripple current is excessively large, a current effective value of a filter capacitor is large. Consequently, the capacitor is overheated, a service life is shortened, or even the capacitor fails in a serious case.

According to the power converter provided in this embodiment of this application, when output voltage directions of any two bridge arms in the inverter circuit are the same and output current directions corresponding to the two bridge arms are the same, the controller may control the two bridge arms, to enable a phase difference between output voltages output by the two bridge arms to be greater than or equal to the first threshold, and therefore enable the output voltages of the two bridge arms to be phase-shifted, to reduce the high-frequency ripple current output by the inverter circuit. In this solution, a circuit structure of the power converter does not need to be changed, costs are reduced while reducing the high-frequency ripple current caused by the inverter circuit.

In a possible implementation, if output voltage directions of any two bridge arms in the inverter circuit are the same and output current directions of the any two bridge arms are opposite, the controller may control a phase difference between output voltages output by the any two bridge arms to be less than a second threshold. The second threshold is less than or equal to the first threshold. Particularly, the phase difference between the output voltages output by the any two bridge arms may alternatively be 0°. In other words, the output voltages output by the two bridge arms are in phase. In the foregoing manner, ripple currents generated by the any two bridge arms can cancel each other, so that a total high-frequency ripple current on a direct current bus is reduced.

In a possible implementation, when output currents of the any two bridge arms are greater than or equal to a preset current, if the output voltage directions of the any two bridge arms are the same and the output current directions of the any two bridge arms are the same, the controller may control the phase difference between the output voltages output by the any two bridge arms to be greater than or equal to the first threshold.

In the foregoing manner, when the output currents of the any two bridge arms in the inverter circuit are greater than or equal to the preset current, if the output voltage directions of the any two bridge arms are the same and the output current directions of the any two bridge arms are the same, the controller may control the phase difference between the output voltages output by the any two bridge arms to be greater than or equal to the first threshold. Therefore, the foregoing process is not performed when the output currents of the bridge arms are excessively small, so that a quantity of phase-shift switching is reduced, and interference is reduced. Similarly, when the output currents of the any two bridge arms in the inverter circuit are greater than or equal to the preset current, if the output voltage directions of the any two bridge arms in the inverter circuit are the same and the output current directions of the any two bridge arms are opposite, the controller may alternatively control the phase difference between the output voltages output by the any two bridge arms to be less than the second threshold.

In a possible implementation, the controller is specifically configured to: at a preset moment in a switching cycle of the inverter circuit, if the output voltage directions of the any two bridge arms are the same and the output current directions of the any two bridge arms are the same, control the phase difference between the output voltages output by the any two bridge arms to be greater than or equal to the first threshold. In the foregoing manner, the controller may perform the foregoing process at the preset moment in the switching cycle of the inverter circuit, so that a moment at which the two bridge arms are phase-shifted can be adjusted based on an actual working condition, and therefore the high-frequency ripple current is limited more effectively.

In a possible implementation, when the plurality of bridge arms in the inverter circuit output three or more different levels, the controller is specifically configured to: if the output voltage directions of the any two bridge arms are the same, voltage ranges of the output voltages of the any two bridge arms are the same and the output current directions of the any two bridge arms are the same, control the phase difference between the output voltages output by the any two bridge arms to be greater than or equal to the first threshold.

In the foregoing manner, when the plurality of bridge arms in the inverter circuit output three or more different levels, the controller may control, when the voltage ranges of the output voltages of the any two bridge arms are the same and the output current directions of the any two bridge arms are the same, the phase difference of the output voltages output by the any two bridge arms to be greater than or equal to the first threshold. Based on this, the any two bridge arms may be more accurately controlled to output phase-shifted output voltages, so that the high-frequency ripple current is limited more effectively.

In a possible implementation, the any two bridge arms are two bridge arms with largest instantaneous values of output currents in the plurality of bridge arms in the inverter circuit. In the foregoing manner, output voltages of two bridge arms with larger output currents may be phase-shifted in a targeted manner, so that the high-frequency ripple current is limited more effectively.

In a possible implementation, a value range of the first threshold is 10° to 180°. If the output voltage directions of the any two bridge arms in the plurality of bridge arms are the same and the output current directions of the any two bridge arms are the same, the phase difference between the output voltages output by the any two bridge arms may be controlled to be greater than or equal to 10° and less than 180°. When an optimal gain is required, the controller may control the phase difference between the output voltages output by the any two bridge arms to be equal to 180°. In the foregoing manner, the high-frequency ripple current can be suppressed to different degrees according to a requirement of the actual working condition.

In a possible implementation, the second threshold is 10°. In the foregoing manner, if the output voltage directions of the any two bridge arms in the inverter circuit are the same and the output current directions of the any two bridge arms are opposite, the phase difference between the output voltages output by the any two bridge arms may be controlled to be less than 10°, so that the output voltages output by the any two bridge arms are approximately in phase or completely in phase, and therefore, the high-frequency ripple current can be better suppressed according to different actual working conditions.

According to a second aspect, a method for controlling an inverter circuit is provided. The control method may be applied in a controller. The inverter circuit includes a plurality of bridge arms. The method includes: if output voltage directions of any two bridge arms in the plurality of bridge arms are the same and output current directions of the any two bridge arms are the same, controlling a phase difference between output voltages output by the any two bridge arms to be greater than or equal to a first threshold.

In a possible implementation, the method further includes: if output voltage directions of any two bridge arms in the inverter circuit are the same and output current directions of the any two bridge arms are opposite, controlling a phase difference between output voltages output by the any two bridge arms to be less than a second threshold, where the second threshold is less than or equal to the first threshold.

In a possible implementation, controlling, if the output voltage directions of the any two bridge arms in the plurality of bridge arms are the same and the output current directions of the any two bridge arms are the same, the phase difference between the output voltages output by the any two bridge arms to be greater than or equal to the first threshold includes:
when output currents of the any two bridge arms are greater than or equal to a preset current, if the output voltage directions of the any two bridge arms are the same and the output current directions of the any two bridge arms are the same, controlling the phase difference between the output voltages output by the any two bridge arms to be greater than or equal to the first threshold.

In a possible implementation, controlling, if the output voltage directions of the any two bridge arms are the same and the output current directions of the any two bridge arms are the same, the phase difference between the output voltages output by the any two bridge arms to be greater than or equal to the first threshold includes:
at a preset moment in a switching cycle of the inverter circuit, if the output voltage directions of the any two bridge arms are the same and the output current directions of the any two bridge arms are the same, controlling the phase difference between the output voltages output by the any two bridge arms to be greater than or equal to the first threshold.

In a possible implementation, when the plurality of bridge arms in the inverter circuit output three or more different levels, controlling, if the output voltage directions of the any two bridge arms are the same and the output current directions of the any two bridge arms are the same, the phase difference between the output voltages output by the any two bridge arms to be greater than or equal to the first threshold includes:
if the output voltage directions of the any two bridge arms are the same, voltage ranges of the output voltages of the any two bridge arms are the same and the output current directions of the any two bridge arms are the same, controlling the phase difference between the output voltages output by the any two bridge arms to be greater than or equal to the first threshold.

In a possible implementation, the any two bridge arms are two bridge arms with largest instantaneous values of output currents in the plurality of bridge arms in the inverter circuit.

In a possible implementation, a value range of the first threshold is 10° to 180°.

In a possible implementation, the second threshold is 10°.

According to a third aspect, a power supply system is provided. The power supply system includes a direct current power supply and the power converter according to any one of the possible implementations of the first aspect. The power converter is configured to convert a direct current of the direct current power supply into an alternating current for output to an alternating current power grid or a load.

According to a fourth aspect, a computer-readable storage medium is provided. The computer-readable storage medium stores program instructions. When the program instructions are executed by a processor, the method for controlling the inverter circuit according to any one of the possible implementations of the second aspect may be implemented.

According to a fifth aspect, a computer program product is provided. When the computer program product is executed by a processor, the method for controlling the inverter circuit according to any one of the possible implementations of the second aspect may be implemented.

For technical principles and beneficial effects of the second aspect to the fifth aspect, refer to related descriptions of the first aspect. Details are not described herein again.

### BRIEF DESCRIPTION OF DRAWINGS

FIG. 1 is a schematic of a topology structure of a power converter according to an embodiment of this application;
FIG. 2 is a schematic of a topology structure of an inverter circuit according to an embodiment of this application;
FIG. 3 is a schematic of another topology structure of an inverter circuit according to an embodiment of this application;
FIG. 4 is a schematic of still another topology structure of an inverter circuit according to an embodiment of this application;
FIG. 5 is a schematic of a structure of a power converter in which a direct current filter circuit is shared according to an embodiment of this application;
FIG. 6 is a schematic flowchart of a method for controlling an inverter circuit according to an embodiment of this application;
FIG. 7 is a schematic flowchart of another method for controlling an inverter circuit according to an embodiment of this application;
FIG. 8 is a schematic flowchart of still another method for controlling an inverter circuit according to an embodiment of this application;
FIG. 9 is a schematic of yet another topology structure of an inverter circuit according to an embodiment of this application;
FIG. 10 is a schematic flowchart of a method for controlling the inverter circuit in FIG. 9 according to an embodiment of this application;
FIG. 11 is a schematic of a structure of a power supply system according to an embodiment of this application; and
FIG. 12 is a schematic of another structure of a power supply system according to an embodiment of this application.

### DESCRIPTION OF EMBODIMENTS

The following describes technical solutions in embodiments of this application with reference to accompanying drawings in embodiments of this application.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular item (piece) or plural items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" do not limit a quantity or a sequence.

It should be noted that, in this application, terms such as "example" or "for example" indicate giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a related concept in a specific manner. Terms such as "connection" and "coupling" in embodiments of this application should be understood in a broad sense. For example, the terms may mean a direct physical connection or an indirect connection implemented through an electronic component, for example, a connection implemented through a resistor, an inductor, a capacitor, or another electronic component.

For ease of understanding of embodiments of this application, the following first describes technologies and terms in embodiments of this application.

Photovoltaic generation system (PGS): The PGS is a power generation system that directly converts solar radiation energy into electric energy by using photovoltaic effective of a semiconductor material. The photovoltaic generation system generally includes a photovoltaic module, an inverter coupled to the photovoltaic module, and the like. In some scenarios, the photovoltaic generation system may further include an energy storage battery coupled to a direct current end of the inverter.

Energy storage system (ESS): The ESS is a device or a system that is configured to store and release electric energy, and includes components such as a battery and an inverter.

Uninterruptible power supply (UPS): The UPS is a system device that connects a battery to a host and converts a direct current into mains power by using a module circuit such as an inverter.

Output voltage direction of a bridge arm: The output voltage direction of the bridge arm is a direction of an output voltage output at a bridge arm midpoint, and the direction of the output voltage may be positive or negative. The output voltage direction of the bridge arm may be determined based on a waveform of the output voltage of the bridge arm midpoint. Alternatively, the output voltage direction of the bridge arm may be determined based on a potential of the bridge arm midpoint and a potential of a bus midpoint. For example, when the potential of the bridge arm midpoint is higher than the potential of the bus midpoint, the direction of the output voltage is positive. When the potential of the bridge arm midpoint is lower than the potential of the bus midpoint, the direction of the output voltage is negative.

Output current direction of a bridge arm: The output current direction of the bridge arm is a direction of an output current output at a bridge arm midpoint. When the output current output at the bridge arm midpoint flows out from the bridge arm midpoint, the output current direction of the bridge arm is positive. When the output current output at the bridge arm midpoint flows into the bridge arm midpoint, the output current direction of the bridge arm is negative. The output current direction of the bridge arm may alternatively be determined based on a waveform of the output current detected at the bridge arm midpoint.

Voltage range: When a plurality of bridge arms of an inverter circuit output three or more levels, a voltage range between two adjacent levels may be used as one voltage range. Detection of the voltage range may also be determined based on a potential of a bridge arm midpoint and a potential of a bus midpoint.

The following describes this application in detail with reference to the accompanying drawings and embodiments.

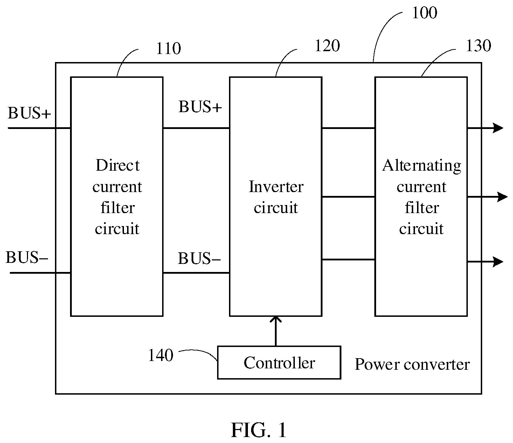

As shown in FIG. 1, a power converter 100 is a device widely used in scenarios such as a photovoltaic generation system (PGS), an energy storage system (ESS), and an uninterruptible power supply (UPS). Components of the power converter 100 generally include a positive direct current bus BUS+, a negative direct current bus BUS-, a direct current filter circuit 110, an inverter circuit 120 (or referred to as an inverter), an alternating current filter circuit 130, and a controller 140. A direct current input end of the inverter circuit 120 is coupled to a direct current power supply through the positive direct current bus BUS+ and the negative direct current bus BUS-, and an alternating current output end of the inverter circuit 120 is coupled to a load and/or an alternating current power grid through the alternating current filter circuit 130. The direct current filter circuit 110 is coupled to the positive direct current bus BUS+ and the negative direct current bus BUS-, and is configured to filter a direct current output by the direct current power supply. The controller 140 is configured to control the inverter circuit 120 to convert a filtered direct current into an alternating current. The alternating current is filtered by the alternating current filter circuit 130, and then a filtered alternating current is output to the load and/or the alternating current power grid.

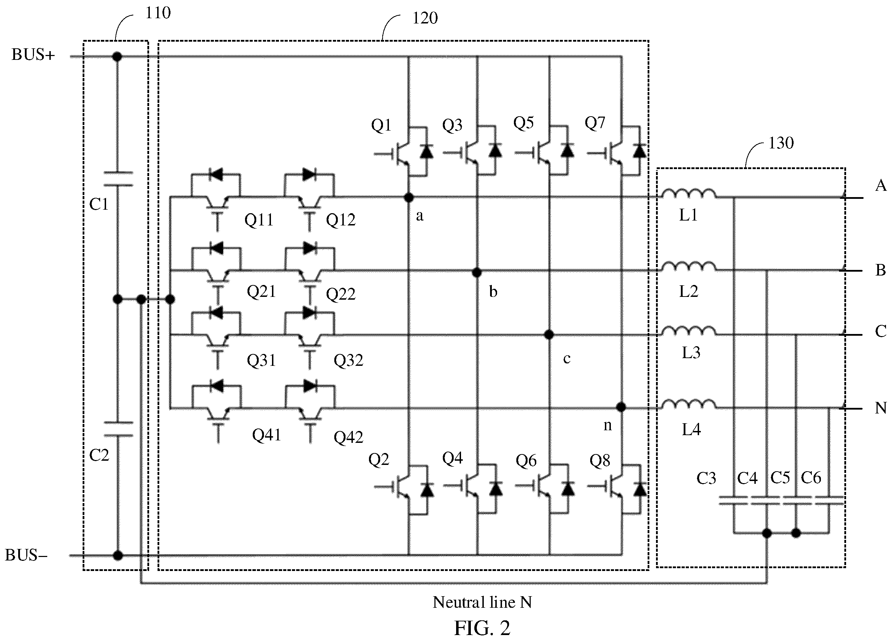

In an implementation solution, as shown in FIG. 2, the inverter circuit 120 may use a T-type three-level four-leg structure, and the structure includes four bridge arms, an A-phase bridge arm, a B-phase bridge arm, a C-phase bridge arm, and an N-phase bridge arm. The A-phase bridge arm includes an upper switching transistor Q1 and a lower switching transistor Q2 that are connected in series between the positive direct current bus BUS+ and the negative direct current bus BUS-. A bridge arm midpoint a of the A-phase bridge arm is coupled to a neutral line N through a switching transistor Q11 and a switching transistor Q12 that are connected in series, and the bridge arm midpoint a of the A-phase bridge arm is configured to output an A-phase voltage (that is, A in FIG. 2). The B-phase bridge arm includes an upper switching transistor Q3 and a lower switching transistor Q4 that are connected in series between the positive direct current bus BUS+ and the negative direct current bus BUS-. A bridge arm midpoint b of the B-phase bridge arm is coupled to the neutral line N through a switching transistor Q21 and a switching transistor Q22 that are connected in series, and the bridge arm midpoint b of the B-phase bridge arm is configured to output a B-phase voltage (that is, B in FIG. 2). The C-phase bridge arm includes an upper switching transistor Q5 and a lower switching transistor Q6 that are connected in series between the positive direct current bus BUS+ and the negative direct current bus BUS-. A bridge arm midpoint c of the C-phase bridge arm is coupled to the neutral line N through a switching transistor Q31 and a switching transistor Q32 that are connected in series, and the bridge arm midpoint c of the C-phase bridge arm is configured to output a C-phase voltage (that is, C in FIG. 2). The N-phase bridge arm includes an upper switching transistor Q7 and a lower switching transistor Q8 that are connected in series between the positive direct current bus BUS+ and the negative direct current bus BUS-. A bridge arm midpoint n of the N-phase bridge arm is coupled to the neutral line N through a switching transistor Q41 and a switching transistor Q42 that are connected in series, and the bridge arm midpoint n of the N-phase bridge arm is configured to output an N-phase voltage (that is, N in FIG. 2).

Still as shown in FIG. 2, the direct current filter circuit 110 includes a positive bus capacitor C1 and a negative bus capacitor C2 that are connected in series between the positive direct current bus BUS+ and the negative direct current bus BUS-, and a midpoint between the positive bus capacitor C1 and the negative bus capacitor C2 is also coupled to the neutral line N.

Still as shown in FIG. 2, the alternating current filter circuit 130 includes four inductor-capacitor filter circuits (inductor-capacitor filter circuits), which are briefly referred to as LC filter circuits. A voltage output at the bridge arm midpoint of each bridge arm is filtered by one LC filter circuit, and then a filtered voltage is output. For example, an output voltage of the bridge arm midpoint a of the A-phase bridge arm is filtered by an LC filter circuit formed by an inductor L1 and a capacitor C3, and then a filtered voltage is output. An output voltage of the bridge arm midpoint b of the B-phase bridge arm is filtered by an LC filter circuit formed by an inductor L2 and a capacitor C4, and then a filtered voltage is output. An output voltage of the bridge arm midpoint c of the C-phase bridge arm is filtered by an LC filter circuit formed by an inductor L3 and a capacitor C5, and then a filtered voltage is output. An output voltage of the bridge arm midpoint n of the N-phase bridge arm is filtered by an LC filter circuit formed by an inductor L4 and a capacitor C6, and then a filtered voltage is output.

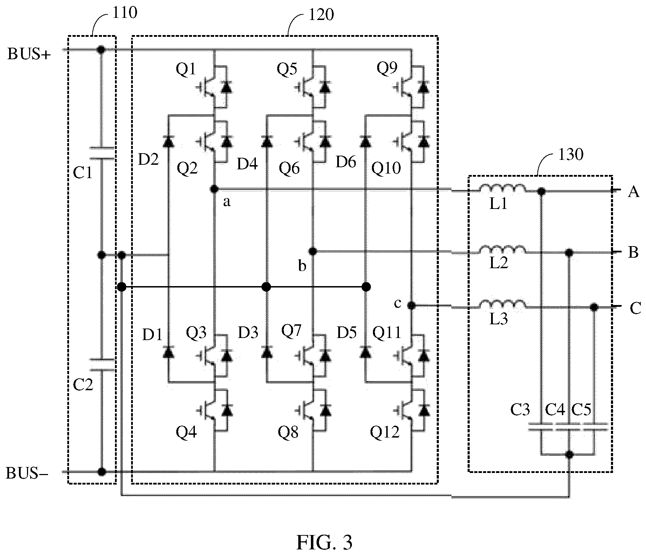

In an implementation solution, as shown in FIG. 3, the inverter circuit 120 may use an I-type three-level three-bridge-arm structure, and the structure includes an A-phase bridge arm, a B-phase bridge arm, and a C-phase bridge arm. The A-phase bridge arm includes an upper switching transistor Q1 and an upper switching transistor Q2 that are connected in series between a bridge arm midpoint a and the positive direct current bus BUS+, and a lower switching transistor Q3 and a lower switching transistor Q4 that are connected in series between the bridge arm midpoint a and the negative direct current bus BUS-. The bridge arm midpoint a of the A-phase bridge arm is configured to output an A-phase voltage. The B-phase bridge arm includes an upper switching transistor Q5 and an upper switching transistor Q6 that are connected in series between a bridge arm midpoint b and the positive direct current bus BUS+, and a lower switching transistor Q7 and a lower switching transistor Q8 that are connected in series between the bridge arm midpoint b and the negative direct current bus BUS-. The bridge arm midpoint b of the B-phase bridge arm is configured to output a B-phase voltage. The C-phase bridge arm includes an upper switching transistor Q9 and an upper switching transistor Q10 that are connected in series between a bridge arm midpoint c and the positive direct current bus BUS+, and a lower switching transistor Q11 and a lower switching transistor Q12 that are connected in series between the bridge arm midpoint c and the negative direct current bus BUS-. The bridge arm midpoint c of the C-phase bridge arm is configured to output a C-phase voltage.

In addition, the A-phase bridge arm further includes a diode D1 and a diode D2. A positive electrode of the diode D1 is coupled to a midpoint between the lower switching transistor Q3 and the lower switching transistor Q4, a negative electrode of the diode D2 is coupled to a midpoint between the upper switching transistor Q1 and the upper switching transistor Q2, and both a negative electrode of the diode D1 and a positive electrode of the diode D2 are coupled to a neutral line N. The B-phase bridge arm further includes a diode D3 and a diode D4. A positive electrode of the diode D3 is coupled to a midpoint between the lower switching transistor Q7 and the lower switching transistor Q8, both a negative electrode of the diode D3 and a positive electrode of the diode D4 are coupled to the neutral line N, and a negative electrode of the diode D4 is coupled to a midpoint between the upper switching transistor Q5 and the upper switching transistor Q6. The C-phase bridge arm further includes a diode D5 and a diode D6. A positive electrode of the diode D5 is coupled to a midpoint between the lower switching transistor Q11 and the lower switching transistor Q12, both a negative electrode of the diode D5 and a positive electrode of the diode D6 are coupled to the neutral line N, and a negative electrode of the diode D6 is coupled to a midpoint between the upper switching transistor Q9 and the upper switching transistor Q10.

Still as shown in FIG. 3, the direct current filter circuit 110 includes a positive bus capacitor C1 and a negative bus capacitor C2 that are connected in series between the positive direct current bus BUS+ and the negative direct current bus BUS-, and a midpoint between the positive bus capacitor C1 and the negative bus capacitor C2 is also coupled to the neutral line N.

Still as shown in FIG. 3, the alternating current filter circuit 130 includes three LC filter circuits. An output voltage of the bridge arm midpoint a of the A-phase bridge arm is filtered by an LC filter circuit formed by an inductor L1 and a capacitor C3, and then the A-phase voltage (that is, A in FIG. 3) is output. An output voltage of the bridge arm midpoint b of the B-phase bridge arm is filtered by an LC filter circuit formed by an inductor L2 and a capacitor C4, and then the B-phase voltage (that is, B in FIG. 3) is output. An output voltage of the bridge arm midpoint c of the C-phase bridge arm is filtered by an LC filter circuit formed by an inductor L3 and a capacitor C5, and then the C-phase voltage (that is, C in FIG. 3) is output.

It may be understood that the foregoing structures of the inverter circuit 120 are merely several example implementation solutions provided in this embodiment of this application. During specific implementation, the inverter circuit 120 may alternatively use another type of structure. This is not specifically limited in this embodiment of this application.

In the power converter 100, switching transistors of each bridge arm in the inverter circuit 120 need to perform a high-frequency switching action to convert a direct current into an alternating current. However, the high-frequency switching action of the switching transistor generates a high-frequency ripple current. If the high-frequency ripple current is excessively large, the bus capacitor in the direct current filter circuit cannot fully absorb the high-frequency ripple current. As a result, the high-frequency ripple current has a risk of damaging a component, and consequently, running stability of the power converter is affected, and a service life of the power converter 100 is shortened. To resolve the foregoing problem, in a related technology, a quantity of bus capacitors in the direct current filter circuit may be increased to limit the high-frequency ripple current. However, in this manner, costs are increased, and power of the inverter circuit is affected.

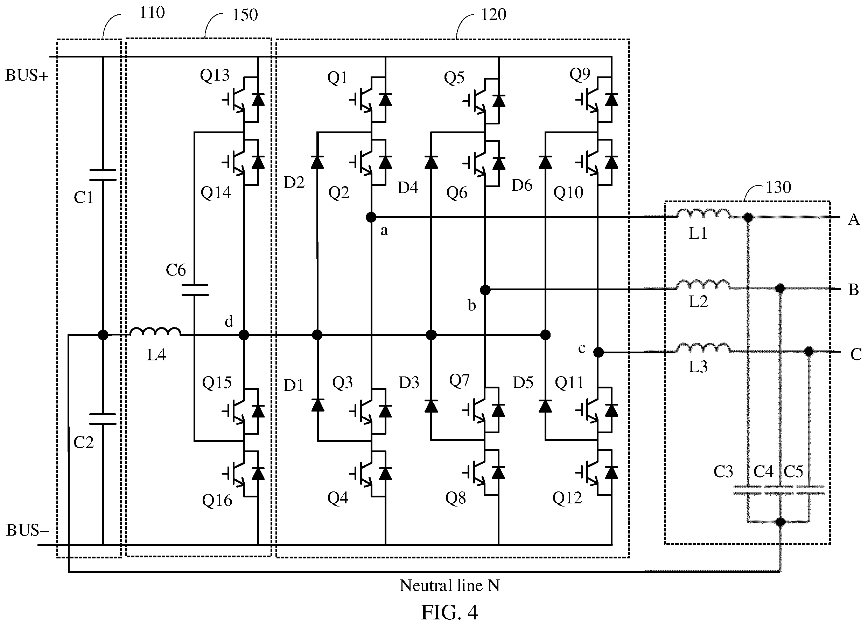

In an implementation solution, as shown in FIG. 4, on a basis of FIG. 3, in some scenarios, to balance output currents of the bridge arms, the power converter 100 may further be provided with a balancing bridge arm 150. The balancing bridge arm 150 includes an upper switching transistor Q13 and an upper switching transistor Q14 that are connected in series between a bridge arm midpoint d and the positive direct current bus BUS+, and a lower switching transistor Q15 and a lower switching transistor Q16 that are connected in series between the bridge arm midpoint d and the negative direct current bus BUS-. In addition, the bridge arm midpoint d is further coupled to the neutral line N through an inductor L4. A capacitor C6 is further disposed between a midpoint between the upper switching transistor Q13 and the upper switching transistor Q14 and a midpoint between the lower switching transistor Q15 and the lower switching transistor Q16. The controller 140 controls the upper switching transistor Q13, the upper switching transistor Q14, the lower switching transistor Q15, and the lower switching transistor Q16, so that voltages of the positive bus capacitor C1 and the negative bus capacitor C2 can be balanced, and therefore, the output currents of the bridge arms are balanced.

It may be understood that the structure of the balancing bridge arm 150 is merely an example implementation provided in this embodiment of this application. When only one switching transistor is disposed on each of the upper bridge arms and the lower bridge arms of the bridge arms in the inverter circuit 120 as shown in FIG. 2, there may alternatively be one switching transistor disposed on the balancing bridge arm 150. In addition, the balancing bridge arm 150 may alternatively use another type of structure. This is not specifically limited in this embodiment of this application.

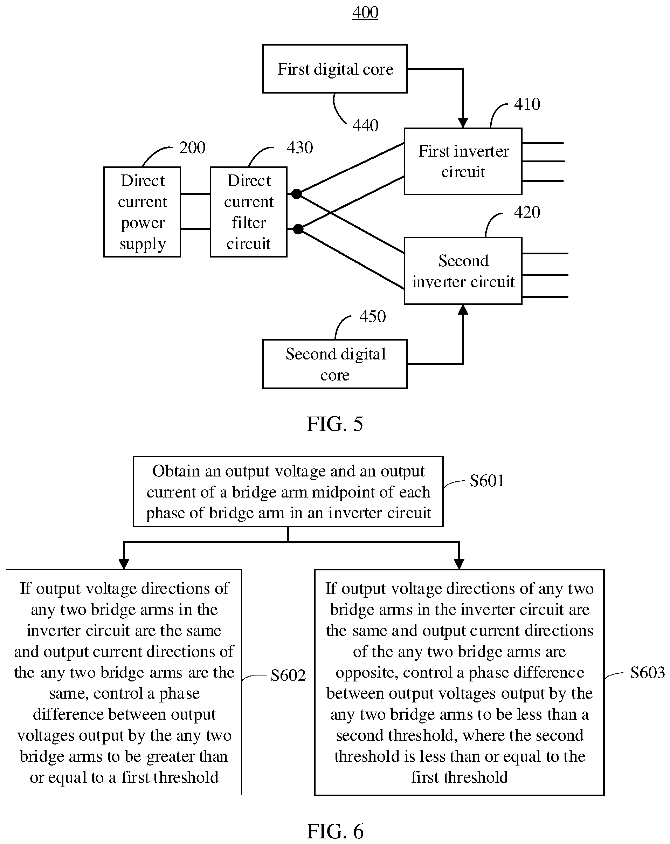

In another related technology, as shown in FIG. 5, in some power converters 400, a high-frequency ripple current is suppressed in a manner in which two inverter circuits share a direct current filter circuit. A first inverter circuit 410 and a second inverter circuit 420 are coupled to a direct current power supply 200 through a same direct current filter circuit 430. The first inverter circuit 410 and the second inverter circuit 420 are respectively controlled by pulse-width modulation waves output by a first digital core 440 and a second digital core 450. Synchronous control is performed between the first digital core 440 and the second digital core 450 by using a clock signal, so that frequencies of the pulse-width modulation waves output by the first digital core 440 and the second digital core 450 are the same, and a phase difference is 180°. In this way, high-frequency ripple currents generated by the first inverter circuit 410 and the second inverter circuit 420 can cancel each other, and therefore, the high-frequency ripple current is limited. However, at least two inverter circuits and two alternating current filter circuits are required to implement this solution. This increases costs and a volume of a single power converter. Therefore, a solution needs to be provided to reduce costs while reducing a high-frequency ripple current caused by an inverter circuit.

To resolve the foregoing problem, as shown in FIG. 6, an embodiment of this application provides a method for controlling an inverter circuit applied to a power converter. The method for controlling the inverter circuit may be performed by a controller 140 in the power converter. A process of performing the method for controlling the inverter circuit is described as follows.

S601: Obtain an output voltage and an output current of a bridge arm midpoint of each bridge arm in the inverter circuit.

In an implementation solution, the controller 140 may detect the output voltage and the output current of the bridge arm midpoint of each bridge arm in the inverter circuit by using a disposed monitoring circuit.

When output voltage directions of any two bridge arms in the inverter circuit are the same and output current directions of the any two bridge arms are the same, the controller 140 may select to perform S602. When output voltage directions of any two bridge arms in the inverter circuit are the same but output current directions of the any two bridge arms are opposite, the controller 140 may select to perform S603.

S602: If the output voltage directions of the any two bridge arms in the inverter circuit are the same and the output current directions of the any two bridge arms are the same, control a phase difference between output voltages output by the any two bridge arms to be greater than or equal to a first threshold.

In a process of converting a direct current into an alternating current, an output voltage and an output current of each bridge arm in the inverter circuit may be converted between a positive voltage and a negative voltage. Therefore, the controller 140 may determine a corresponding output voltage direction and output current direction based on the output voltage and the output current detected by the monitoring circuit, that is, determine whether the output voltage and the output current are positive or negative.

When output voltage directions of two bridge arms in the inverter circuit are the same and output current directions of the two bridge arms are the same, high-frequency ripple currents generated by the two bridge arms are superposed. As a result, a total high-frequency ripple current output by the inverter circuit is excessively large. In this case, the controller 140 may control the phase difference between the output voltages output by the two bridge arms to be greater than or equal to the first threshold, to cancel, to some extent, the high-frequency ripple current generated by the two bridge arms.

In the foregoing implementation process, the output voltage directions of the any two bridge arms may alternatively be determined based on modulation waves output by the controller 140 to switching transistors corresponding to the bridge arms, because when the output voltage directions of the any two bridge arms are the same, the modulation waves output by the controller 140 to the switching transistors of the any two bridge arms are in phase.

In a possible implementation solution, in a process of controlling, if the output voltage directions of the any two bridge arms in a plurality of bridge arms are the same and the output current directions of the any two bridge arms are the same, the phase difference between the output voltages output by the any two bridge arms to be greater than or equal to the first threshold, a value range of the phase difference between the output voltages output by the any two bridge arms may be controlled to be [10°, 180°]. A specific manner of setting the first threshold may alternatively be adaptively adjusted according to a requirement of an actual use scenario of the inverter circuit. This is not specifically limited in this embodiment of this application. For example, when there is a low requirement for suppressing the high-frequency ripple current in the actual use scenario, the first threshold may be set to a small value. When there is a high requirement for suppressing the high-frequency ripple current in the actual use scenario, the first threshold may be set to a large value.

In an example, if there is a high requirement for suppressing the high-frequency ripple current in the actual use scenario, the first threshold may be selectively set to 90°. To be specific, when output voltage directions of any two bridge arms in the plurality of bridge arms are the same and output current directions of the any two bridge arms are the same, the controller 140 may control a phase difference between output voltages output by the two bridge arms to be greater than or equal to 90°. If there is a low requirement for suppressing the high-frequency ripple current in the actual use scenario, the first threshold may be selectively set to 10°. To be specific, when output voltage directions of any two bridge arms in the plurality of bridge arms are the same and output current directions of the any two bridge arms are the same, the controller 140 may control a phase difference between output voltages output by the two bridge arms to be greater than or equal to 10°. A minimum value of the first threshold is set to 10° based on an actual effect of suppressing the high-frequency ripple current. When a requirement for suppressing the high-frequency ripple current is not very high, the minimum value of the first threshold may also be reduced.

In an implementation solution, it is considered that the phase difference between the output voltages of the two bridge arms closer to 180° indicates a better effect of suppressing the high-frequency ripple current. Therefore, the first threshold may alternatively be selectively set to 170°. In other words, the value range of the phase difference between the output voltages output by the two bridge arms is [170°, 180°].

In a possible implementation solution, when the phase difference between the output voltages of the two bridge arms is 180°, the effect of suppressing the high-frequency ripple circuit optimal. Therefore, the controller 140 may control the two bridge arms to output output voltages with a phase difference of 180°, so that the output voltages of the two bridge arms are phase-shifted by 180°. The inverter circuit in FIG. 3 is used as an example. If a direction of the output voltage output at the bridge arm midpoint of the A-phase bridge arm and a direction of the output voltage output at the bridge arm midpoint of the B-phase bridge arm are the same (for example, both are positive voltages) and a direction of an output current output at the bridge arm midpoint of the A-phase bridge arm and a direction of an output current output at the bridge arm midpoint of the B-phase bridge arm are the same, a phase difference between output voltages output by the A-phase bridge arm and the B-phase bridge arm may be controlled to be 180°. A phase of the output voltage of the B-phase bridge arm may lag a phase of the output voltage of the A-phase bridge arm by 180°. Alternatively, a phase of the output voltage of the B-phase bridge arm may lead a phase of the output voltage of the A-phase bridge arm by 180°. This is specifically subject to an actual requirement. This is not specifically limited in this embodiment of this application.

It may be understood that a specific value of the first threshold is merely an example implementation provided in this embodiment of this application. During specific implementation, the first threshold may be set to any value from 10° to 180°. This is not specifically limited in this embodiment of this application.

For example, in a scenario, the foregoing control method is performed, so that the output voltage of the A-phase bridge arm and an output voltage of the C-phase bridge arm are phase-shifted. The output voltage and an output current of the B-phase bridge arm remain unchanged in an entire process. In this case, an output current of the A-phase bridge arm and an output current of the C-phase bridge arm may also change to be phase-shifted, so that the output currents of the two bridge arms do not increase at the same time. Therefore, a high-frequency ripple current is limited. Refer to the foregoing manner. When the output voltage directions are the same and the output current directions are the same, phase-shift output statuses of the output voltages of the A-phase bridge arm, the B-phase bridge arm, and the C-phase bridge arm are shown in Table 1. "+" indicates that an output voltage direction is positive, and "-" indicates that the output voltage direction is negative. DP indicates that an output voltage of a bridge arm is maintained at a maximum value or a minimum value, and a voltage direction is the same as that at a previous or subsequent moment. At a DP moment, the bridge arm does not generate a high-frequency ripple current. Therefore, a direction is not limited.

**Table 1**

| Bridge arm | Output voltage direction | | | | | |
|---|---|---|---|---|---|---|
| A | + | DP | + | - | DP | - |
| B | DP | - | + | DP | + | - |
| C | + | - | DP | - | + | DP |
| Phase-shifted bridge arm | AC | BC | AB | AC | BC | AB |

It may be understood that the first threshold is merely an example implementation provided in this embodiment of this application. During specific implementation, the first threshold may be adaptively adjusted according to a requirement of an actual application scenario. In addition, a phase-shift manner of output voltages of the bridge arm shown in Table 1 is merely an example implementation provided in this embodiment of this application. This is not specifically limited in this embodiment of this application.

S603: If the output voltage directions of the any two bridge arms in the inverter circuit are the same and the output current directions of the any two bridge arms are opposite, control a phase difference between output voltages output by the any two bridge arms to be less than a second threshold. The second threshold is less than or equal to the first threshold.

In a possible implementation solution, the second threshold may be selectively set to 10°. Based on this, the any two bridge arms may output output voltages that are approximately in phase or completely in phase, so that a high-frequency ripple current is suppressed more effectively. It may be understood that, when control accuracy can meet a requirement, the second threshold may alternatively be less than 10°. This is not specifically limited in this embodiment of this application. For example, if feasible, the any two bridge arms may alternatively output in-phase output voltages. In other words, the phase difference between the output voltages of the any two bridge arms is 0°, to better improve a gain.

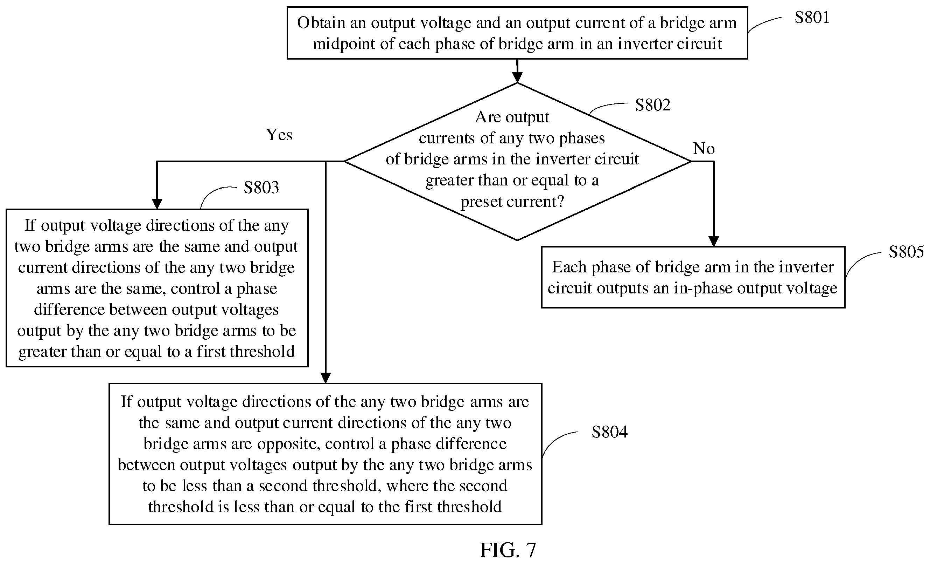

In a possible implementation solution, to further improve a gain of a bus capacitor in a direct current filter circuit, in the control method provided in this embodiment of this application, the inverter circuit may be further controlled when any two bridge arms in the inverter circuit meet a preset condition. The preset condition may be as follows: Output currents of any two bridge arms in the inverter circuit are greater than or equal to a preset current, or a preset moment in a switching cycle of the inverter circuit. In an example, the foregoing method for controlling the inverter circuit may be performed in a manner shown in FIG. 7. Specific content is described as follows.

S801: Obtain an output voltage and an output current of a bridge arm midpoint of each bridge arm in the inverter circuit.

S802: Determine whether output currents of any two bridge arms in the inverter circuit are greater than or equal to a preset current.

If the output currents of the any two bridge arms are greater than or equal to the preset current, S803 and S804 are performed. If the output currents of the any two bridge arms are less than the preset current, S805 is performed.

In an implementation solution, the preset current may be selectively set to 20% of a current amplitude of output currents of a plurality of bridge arms. When determining that the output currents of the any two bridge arms are greater than or equal to 20% of the current amplitude, the controller 140 performs S803 and S804. When output voltage directions of any two bridge arms in the inverter circuit are the same and output current directions of the any two bridge arms are the same, the controller 140 may select to perform S803. When output voltage directions of any two bridge arms in the inverter circuit are the same but output current directions of the any two bridge arms are opposite, the controller 140 may select to perform S804.

It may be understood that a specific value of the preset current may alternatively be adjusted according to an actual requirement. This is not specifically limited in this embodiment of this application.

S803: When the output currents of the any two bridge arms in the inverter circuit are greater than or equal to the preset current, if the output voltage directions of the any two bridge arms are the same and the output current directions of the any two bridge arms are the same, control a phase difference between output voltages output by the any two bridge arms to be greater than or equal to a first threshold.

S804: When the output currents of the any two bridge arms are greater than or equal to the preset current, if the output voltage directions of the any two bridge arms are the same and the output current directions of the any two bridge arms are opposite, control a phase difference between output voltages output by the any two bridge arms to be less than a second threshold. The second threshold is less than or equal to the first threshold.

S805: Each bridge arm in the inverter circuit outputs an in-phase output voltage.

In the foregoing manner, the controller 140 needs to perform S802 to S804 only when the output currents of the any two bridge arms are greater than or equal to the preset current, to avoid that the foregoing manner is still used for adjustment when the output currents of the any two bridge arms are excessively small, so that a quantity of phase-shift switching can be reduced, interference can be reduced, and therefore, the gain of the bus capacitor in the direct current filter circuit is improved.

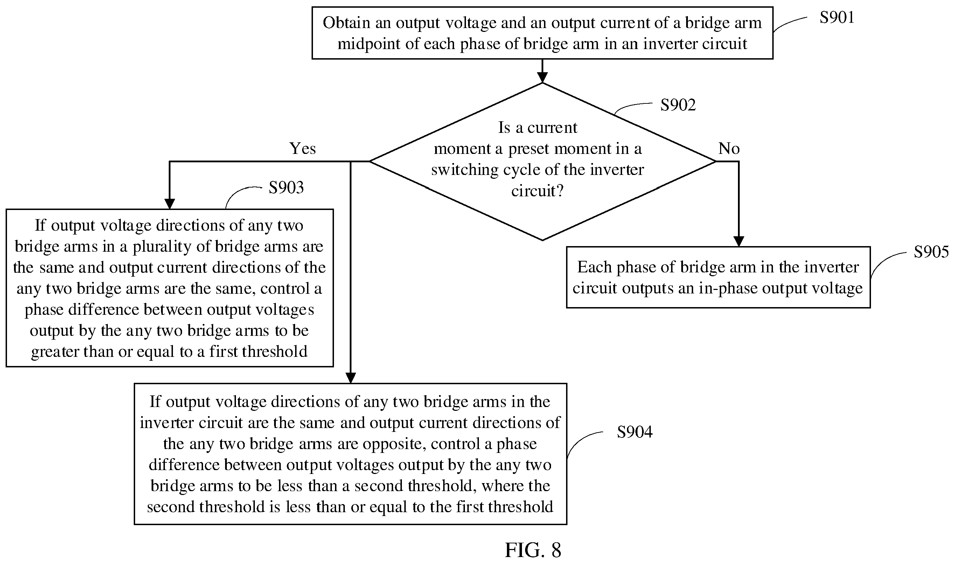

In another example, it is considered that a high-frequency ripple current generated by the inverter circuit is excessively high in a harsh working condition. Therefore, the controller 140 may perform, at a preset moment in a switching cycle of the inverter circuit, the method for controlling the inverter circuit provided in this embodiment of this application. The method for controlling the inverter circuit may be performed in a manner shown in FIG. 8. Specific content is described as follows.

S901: Obtain an output voltage and an output current of a bridge arm midpoint of each bridge arm in the inverter circuit.

S902: Determine whether a current moment is a preset moment in a switching cycle of the inverter circuit.

If the current moment is the preset moment in the switching cycle of the inverter circuit, S903 and S904 are performed. If the current moment is not the preset moment in the switching cycle of the inverter circuit, S905 is performed.

In an implementation solution, a harsh working condition of a high-frequency ripple current may be identified in advance through an experiment, simulation, or another simulation means, and a moment at which two bridge arms in the inverter circuit are phase-shifted is preset based on a phase relationship between a voltage and a current in the harsh working condition, and is stored in a memory in a manner of a lookup table. Then, the controller 140 may determine a present power-frequency phase of the inverter circuit based on information transferred by a monitoring circuit disposed on the inverter circuit, and obtain a current output voltage phase-shift output manner by using a table lookup method.

The controller 140 may determine an output voltage direction and an output current direction of each bridge arm at the preset moment in the switching cycle of the inverter circuit based on the output voltage and the output current. When output voltage directions of any two bridge arms in the inverter circuit are the same and output current directions of the any two bridge arms are the same, the controller 140 may select to perform S903. When output voltage directions of any two bridge arms in the inverter circuit are the same but output current directions of the any two bridge arms are opposite, the controller 140 may select to perform S904.

S903: At the preset moment in the switching cycle of the inverter circuit, if the output voltage directions of the any two bridge arms of a plurality of bridge arms are the same and the output current directions of the any two bridge arms are the same, control a phase difference of output voltages output by the any two bridge arms to be greater than or equal to a first threshold.

S904: At the preset moment in the switching cycle of the inverter circuit, if the output voltage directions of the any two bridge arms in the inverter circuit are the same and the output current directions of the any two bridge arms are opposite, control a phase difference of output voltages output by the any two bridge arms to be less than a second threshold. The second threshold is less than or equal to the first threshold.

S905: Each bridge arm in the inverter circuit outputs an in-phase output voltage.

In the foregoing manner, the controller 140 needs to perform S902 to S904 only at the preset moment in the switching cycle of the inverter circuit, so that a quantity of phase-shift switching can be reduced, interference can be reduced, and therefore the gain of the bus capacitor in the direct current filter circuit is improved.

In a possible implementation solution, when the inverter circuit uses the structure shown in FIG. 2, if the inverter circuit has three or more bridge arms, when the control method in any implementation solution shown in FIG. 6, FIG. 7, and FIG. 8 is performed, the any two bridge arms are two bridge arms with largest instantaneous values of output currents in the plurality of bridge arms in the inverter circuit. For example, if output currents of the B-phase bridge arm and the C-phase bridge arm are largest among the A-phase bridge arm, the B-phase bridge arm, the C-phase bridge arm, and the N-phase bridge arm, the any two bridge arms are the B-phase bridge arm and the C-phase bridge arm. Similarly, when the inverter circuit uses the structure shown in FIG. 3, the any two bridge arms are two bridge arms with largest instantaneous values of output currents in the A-phase bridge arm, the B-phase bridge arm, and the C-phase bridge arm.

It may be understood that, because there are a plurality of types of structures of the inverter circuit, and the control method provided in this embodiment of this application is performed by the controller 140, a specific structure of the inverter circuit used in embodiments of this application is not specifically limited.

In a possible implementation solution, based on FIG. 2 or FIG. 3, the direct current filter circuit may further include a plurality of capacitors connected in series to the positive bus capacitor C1 and the negative bus capacitor C2, so that each bridge arm in the inverter circuit outputs three or more levels. Therefore, in this scenario, when performing the foregoing control method, the controller 140 further needs to control, when the output voltage directions of the any two bridge arms in the inverter circuit are the same, voltage ranges of the output voltages of the any two bridge arms are the same and the output current directions of the any two bridge arms are the same, the phase difference between the output voltages output by the any two bridge arms to be greater than or equal to the first threshold.

It may be understood that, before performing the foregoing operation, the controller 140 may further first determine whether the any two bridge arms meet the preset condition. Details are not described in this embodiment of this application.

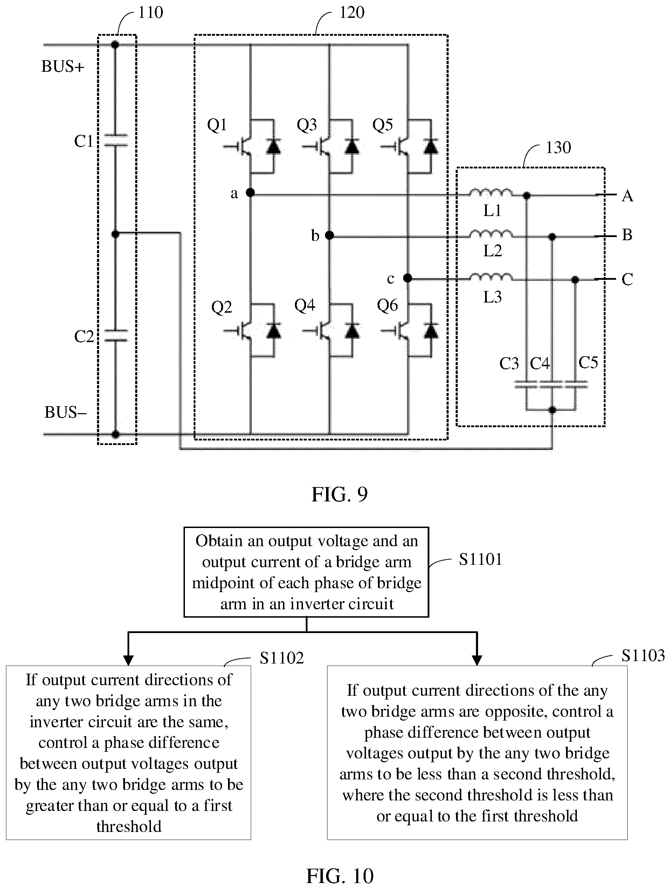

In a possible implementation solution, as shown in FIG. 9, the inverter circuit 120 provided in this embodiment of this application may alternatively use a two-level three-bridge-arm structure. The inverter circuit 120 includes an A-phase bridge arm, a B-phase bridge arm, and a C-phase bridge arm. The A-phase bridge arm includes an upper switching transistor Q1 and a lower switching transistor Q2 that are connected in series between a positive direct current bus BUS+ and a negative direct current bus BUS-, and a bridge arm midpoint a of the A-phase bridge arm is configured to output an A-phase voltage. The B-phase bridge arm includes an upper switching transistor Q3 and a lower switching transistor Q4 that are connected in series between the positive direct current bus BUS+ and the negative direct current bus BUS-, and a bridge arm midpoint b of the B-phase bridge arm is configured to output a B-phase voltage. The C-phase bridge arm includes an upper switching transistor Q5 and a lower switching transistor Q6 that are connected in series between the positive direct current bus BUS+ and the negative direct current bus BUS-, and a bridge arm midpoint c of the C-phase bridge arm is configured to output a C-phase voltage.

Still as shown in FIG. 9, the direct current filter circuit 110 includes a positive bus capacitor C1 and a negative bus capacitor C2 that are connected in series between the positive direct current bus BUS+ and the negative direct current bus BUS-, and a midpoint between the positive bus capacitor C1 and the negative bus capacitor C2 is also coupled to a neutral line N.

Still as shown in FIG. 9, an alternating current filter circuit 130 includes three LC filter circuits. An output voltage of the bridge arm midpoint a of the A-phase bridge arm is filtered by an LC filter circuit formed by an inductor L1 and a capacitor C3, and then a filtered voltage is output. An output voltage of the bridge arm midpoint b of the B-phase bridge arm is filtered by an LC filter circuit formed by an inductor L2 and a capacitor C4, and then a filtered voltage is output. An output voltage of the bridge arm midpoint c of the C-phase bridge arm is filtered by an LC filter circuit formed by an inductor L3 and a capacitor C5, and then a filtered voltage is output.

It may be understood that, on a basis of using the foregoing structure by an inverter circuit 120, a power converter 100 may further include a balancing bridge arm. Details are not described in this embodiment of this application.

On a basis of using the structure shown in FIG. 9 by the inverter circuit, an execution process of the method for controlling the inverter circuit when performed by the controller is shown in FIG. 10.

S1101: Obtain an output voltage and an output current of a bridge arm midpoint of each bridge arm in the inverter circuit.

S1102: If output current directions of any two bridge arms in the inverter circuit are the same, control a phase difference between output voltages output by the any two bridge arms to be greater than or equal to a first threshold.

S1103: If the output current directions of the any two bridge arms are opposite, control a phase difference between output voltages output by the any two bridge arms to be less than a second threshold. The second threshold is less than or equal to the first threshold.

In the foregoing manner, when the inverter circuit is of the two-level three-bridge-arm structure, the output voltage directions do not need to be determined, and whether the output voltages of the any two bridge arms should be phase-shifted may be determined only based on the output current directions.

It may be understood that, before performing the foregoing operation, a controller 140 may further first determine whether the any two bridge arms meet a preset condition. Details are not described in this embodiment of this application.

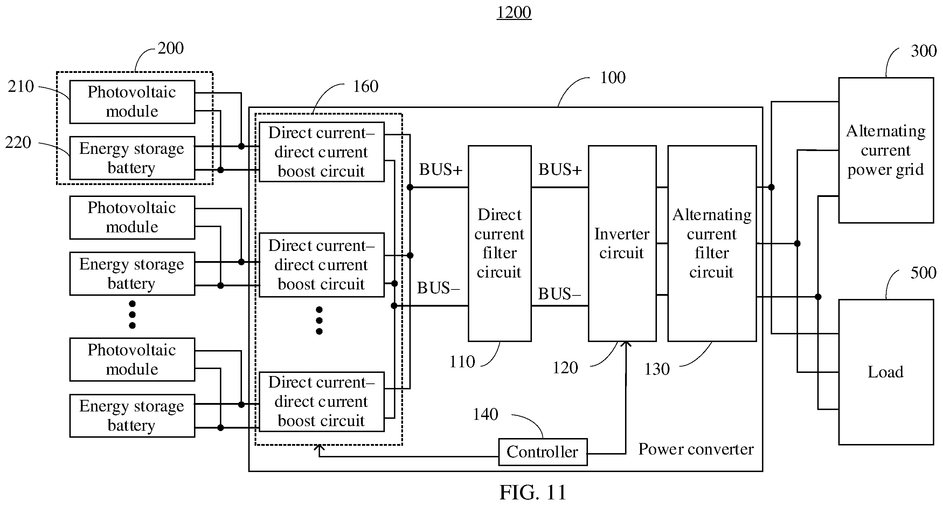

In a possible implementation solution, as shown in FIG. 11, an embodiment of this application provides a power supply system 1200. The power supply system 1200 includes a direct current power supply 200, a power converter 100, an alternating current power grid 300, and a load 500. The direct current power supply 200 includes a photovoltaic module 210 and an energy storage battery 220. On a basis of FIG. 1, the power converter 100 further includes a direct current-direct current boost circuit 160. The photovoltaic module 210 and the energy storage battery 220 are coupled to a positive direct current bus BUS+ and a negative direct current bus BUS- through the direct current-direct current boost circuit 160. The controller 140 is configured to control the direct current-direct current boost circuit 160 and the inverter circuit 120. When there are a plurality of groups of direct current power supplies 200, there are also a plurality of direct current-direct current boost circuits 160, and each group of direct current power supplies 200 is coupled to the positive direct current bus BUS+ and the negative direct current bus BUS- through one direct current-direct current boost circuit 160.

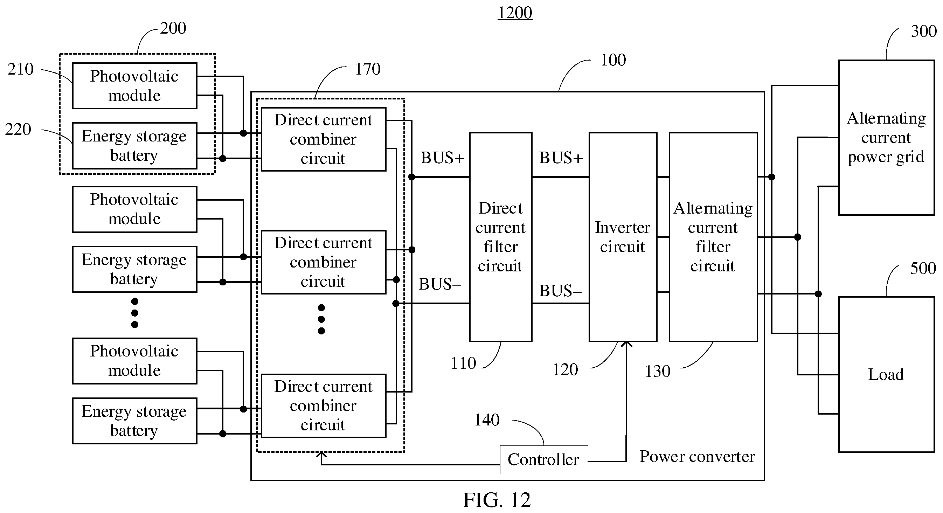

In a possible implementation solution, as shown in FIG. 12, an embodiment of this application provides a power supply system 1200. The power supply system 1200 includes a direct current power supply 200, a power converter 100, an alternating current power grid 300, and a load 500. The direct current power supply 200 includes a photovoltaic module 210 and an energy storage battery 220. On a basis of FIG. 1, the power converter 100 further includes a direct current combiner circuit 170. The photovoltaic module 210 and the energy storage battery 220 are sequentially coupled to a positive direct current bus BUS+ and a negative direct current bus BUS- through the direct current combiner circuit 170. The controller 140 is configured to control the inverter circuit 120. When there are a plurality of groups of direct current power supplies 200, there are also a plurality of direct current combiner circuits 170, and each group of direct current power supplies 200 is coupled to the positive direct current bus BUS+ and the negative direct current bus BUS- through one direct current combiner circuit 170.

In an implementation solution, an embodiment of this application further provides a computer-readable storage medium. The computer-readable storage medium stores computer program instructions. When the computer program instructions are executed by a processor, the method for controlling the inverter circuit in any one of the foregoing implementation solutions is implemented. The computer-readable storage medium may be a magnetic medium (for example, a floppy disk, a hard disk, or a magnetic tape), an optical medium (for example, a DVD), a semiconductor medium (for example, a solid state disk (SSD)), or the like.

In an implementation solution, an embodiment of this application further provides a computer program product. When the computer program product is executed by a processor, the method for controlling the inverter circuit in any one of the foregoing implementation solutions is implemented. The computer program product may be downloaded in a manner of providing an online service, may be built in an on-chip memory in a controller 140, or may be stored in an off-chip memory.

The controller 140 in embodiments of this application may be a chip. For example, the chip may be a field programmable gate array (FPGA), an application-specific integrated chip (ASIC), a system on chip (SoC), a central processing unit (CPU), a network processor (NP), a digital signal processing circuit (DSP), a microcontroller unit (MCU), a programmable logic device (PLD), or another integrated chip.

The memory in embodiments of this application may be a volatile memory or a nonvolatile memory, or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and is used as an external cache. Through example but not limitative description, a plurality of forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memories of the systems and methods described in this specification include but are not limited to these memories and any memory of another proper type.

In the several embodiments provided in this application, it should be understood that the disclosed system, circuit, and component may be implemented in another manner. For example, the described component embodiment is merely an example. For example, division into circuits and modules is merely division into logical functions and may be other division during actual application. For example, a plurality of circuits or components may be combined or may be integrated into another device, or some features may be ignored or not performed. In addition, the displayed or discussed mutual couplings or direct couplings or communication connections may be implemented through some interfaces. The indirect couplings or communication connections between the devices or circuits may be implemented in electronic, mechanical, or other forms.

The circuits described as separate parts may or may not be physically separate, and parts displayed as circuits may or may not be physical circuits, may be located in one device, or may be distributed in a plurality of devices. Some or all of the circuits may be selected based on actual requirements to achieve the objectives of the solutions of embodiments.

In addition, functional circuits in embodiments of this application may be integrated into one device, each of the circuits may exist alone physically, or two or more circuits are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising an inverter circuit and a controller, wherein the inverter circuit comprises a plurality of bridge arms, and the controller is configured to:
if output voltage directions of any two bridge arms in the plurality of bridge arms are the same and output current directions of the any two bridge arms are the same, control a phase difference between output voltages output by the any two bridge arms to be greater than or equal to a first threshold.

2. The power converter according to claim 1, wherein the controller is further configured to:
if output voltage directions of any two bridge arms in the inverter circuit are the same and output current directions of the any two bridge arms are opposite, control a phase difference between output voltages output by the any two bridge arms to be less than a second threshold, wherein the second threshold is less than or equal to the first threshold.

3. The power converter according to claim 1 or 2, wherein the controller is specifically configured to:
when output currents of the any two bridge arms are greater than or equal to a preset current, if the output voltage directions of the any two bridge arms are the same and the output current directions of the any two bridge arms are the same, control the phase difference between the output voltages output by the any two bridge arms to be greater than or equal to the first threshold.

4. The power converter according to claim 1 or 2, wherein the controller is specifically configured to:
at a preset moment in a switching cycle of the inverter circuit, if the output voltage directions of the any two bridge arms are the same and the output current directions of the any two bridge arms are the same, control the phase difference between the output voltages output by the any two bridge arms to be greater than or equal to the first threshold.

5. The power converter according to any one of claims 1 to 4, wherein when the plurality of bridge arms output three or more different levels, the controller is specifically configured to:
if the output voltage directions of the any two bridge arms are the same, voltage ranges of the output voltages of the any two bridge arms are the same and the output current directions of the any two bridge arms are the same, control the phase difference between the output voltages output by the any two bridge arms to be greater than or equal to the first threshold.

6. The power converter according to any one of claims 1 to 5, wherein the any two bridge arms are two bridge arms with largest instantaneous values of output currents in the plurality of bridge arms.

7. The power converter according to any one of claims 1 to 6, wherein a value range of the first threshold is 10° to 180°.

8. The power converter according to any one of claims 2 to 7, wherein the second threshold is 10°.

9. A method for controlling an inverter circuit, wherein the inverter circuit comprises a plurality of bridge arms, and the method comprises:
if output voltage directions of any two bridge arms in the plurality of bridge arms are the same and output current directions of the any two bridge arms are the same, controlling a phase difference between output voltages output by the any two bridge arms to be greater than or equal to a first threshold.

10. The method according to claim 9, wherein the method further comprises:
if output voltage directions of any two bridge arms in the inverter circuit are the same and output current directions of the any two bridge arms are opposite, controlling a phase difference between output voltages output by the any two bridge arms to be less than a second threshold, wherein the second threshold is less than or equal to the first threshold.

11. The method according to claim 9 or 10, wherein controlling, if the output voltage directions of the any two bridge arms in the plurality of bridge arms are the same and the output current directions of the any two bridge arms are the same, the phase difference between the output voltages output by the any two bridge arms to be greater than or equal to the first threshold comprises:
when output currents of the any two bridge arms are greater than or equal to a preset current, if the output voltage directions of the any two bridge arms are the same and the output current directions of the any two bridge arms are the same, controlling the phase difference between the output voltages output by the any two bridge arms to be greater than or equal to the first threshold.

12. The method according to claim 9 or 10, wherein controlling, if the output voltage directions of the any two bridge arms in the plurality of bridge arms are the same and the output current directions of the any two bridge arms are the same, the phase difference between the output voltages output by the any two bridge arms to be greater than or equal to the first threshold comprises:
at a preset moment in a switching cycle of the inverter circuit, if the output voltage directions of the any two bridge arms are the same and the output current directions of the any two bridge arms are the same, controlling the phase difference between the output voltages output by the any two bridge arms to be greater than or equal to the first threshold.

13. The method according to any one of claims 9 to 12, wherein when the plurality of bridge arms output three or more different levels, controlling, if the output voltage directions of the any two bridge arms in the plurality of bridge arms are the same and the output current directions of the any two bridge arms are the same, the phase difference between the output voltages output by the any two bridge arms to be greater than or equal to the first threshold comprises:
if the output voltage directions of the any two bridge arms are the same, voltage ranges of the output voltages of the any two bridge arms are the same and the output current directions of the any two bridge arms are the same, controlling the phase difference between the output voltages output by the any two bridge arms to be greater than or equal to the first threshold.

14. The method according to any one of claims 9 to 13, wherein the any two bridge arms are two bridge arms with largest instantaneous values of output currents in the plurality of bridge arms.

15. The method according to any one of claims 9 to 14, wherein a value range of the first threshold is 10° to 180°.
